# EUROPEAN PATENT SPECIFICATION

(11) **EP 2 518 037 B1**
(45) Date of publication and mention of the grant of the patent: **15.08.2018**
(21) Application number: 10842009.2
(22) Date of filing: 20.12.2010
(51) Int. Cl.: C04B 35/19, C04B 35/645, C04B 35/626, C04B 35/195

(54) **COMPOSITE MATERIAL HAVING CONTROLLED COEFFICIENT OF THERMAL EXPANSION WITH OXIDIC CERAMICS AND PROCEDURE FOR THE OBTAINMENT THEREOF**
VERBUNDMATERIAL MIT GESTEUERTEM WÄRMEAUSDEHNUNGSKOEFFIZIENTEN MIT OXIDKERAMIK UND VERFAHREN ZU DESSEN ERHALT
MATÉRIAU COMPOSITE À COEFFICIENT DE DILATATION THERMIQUE CONTRÔLÉ, COMPRENANT DES CÉRAMIQUES OXYDIQUES, ET PROCÉDÉ PERMETTANT DE L'OBTENIR

(30) Priority: 21.12.2009 ES 200931218
(43) Date of publication of application: 31.10.2012
(73) Proprietor: Consejo Superior De Investigaciones Científicas (CSIC), 28006 Madrid (ES)
(72) Inventor: TORRECILLAS SAN MILLAN, Ramón, E-33011 Oviedo (Asturias) (ES); GARCÍA MORENO, Olga, E-33011 Oviedo (Asturias) (ES); FERNÁNDEZ VALDES, Adolfo, E-33428 Llanera (Asturias) (ES)
(74) Representative: Pons
(86) International application number: PCT/ES2010/070850
(87) International publication number: WO 2011/083193

(56) References cited:
- EP-A1- 1 338 580
- EP-A1- 2 383 240
- JP-A- 2001 058 867
- JP-A- 2002 173 365
- JP-A- 2003 026 470
- JP-A- 2003 238 237
- US-A1- 2007 225 153
- SHIMADA T ET AL: "Simultaneous fabrication of a composite with low thermal expansion and high strength in the eucryptite- yttria-stabilized PSZ system", JOURNAL OF MATERIALS SCIENCE, SPRINGER NETHERLANDS, NL , vol. 31, no. 14 1 January 1996 (1996-01-01), pages 3691-3695, XP002610192, ISSN: 0022-2461, DOI: 10.1007/BF00352781 Retrieved from the Internet: URL:http://www.springerlink.com/content/r7 5w3317g1l214u2/ [retrieved on 2010-11-17]
- GEODAKYAN J A ET AL: "The Influence of Beta-Eucryptite Glassceramics on the Structure and Main Properties of Alumina Ceramics", INTERNATIONAL COCOA BEACH CONFERENCE ON ADVANCED CERAMICS AND COMPOSITES, XX, XX , vol. 25, no. 4 26 March 2008 (2008-03-26), pages 37-42, XP002610193, DOI: 10.1002/9780470291191.CH7 Retrieved from the Internet: URL:http://onlinelibrary.wiley.com/doi/10. 1002/9780470291191.ch7/summary [retrieved on 2010-11-17]
- TULYAGANOV,D.U. ET AL.: 'Synthesis of lithiumaluminosilicate glass and glass-ceramics from spodumene material' CERAMICS INTERNAITONAL vol. 30, 2004, pages 1023 - 1030, XP004516847
- MANDAL, S. ET AL.: 'Synthesis of low expansion cermicsin lithia-alumina-silica system with zirconia additive using the powder precursor in the form of hydroxyhydrogel' CERAMICS INTERNATIONAL vol. 33, 15 December 2005, pages 123 - 132, XP005788168
- GUO-HUA CHEN ET AL.: 'Sintering, crystallization and properties of MgO-A1203-Si02 glass-ceramics containing ZnO' JOURNAL OF ALLOYS AND COMPOUNDS vol. 431, 23 June 2006, pages 282 - 286, XP005911344

## Description

The present invention relates to a composite material comprising a ceramic component, characterized in that it has a negative coefficient of thermal expansion, and oxidic ceramic particles, to its obtainment process and to its uses in microelectronics, precision optics, aeronautics and aerospace.

### PRIOR ART

Materials with low coefficient of thermal expansion (CTE) have a broad range of applications in very different fields. These types of materials are required in many types of precision apparatus and in instrumentation equipment in high-technology systems, in the microelectronics industry and precision optics. In short, in all those applications wherein dimensional stability has to be guaranteed of a precision element with changes in temperature, which makes it necessary to decrease the CTE of the materials that form these elements. The imbalance in the thermal expansion in elements manufactured with different materials may also be resolved using the design of composites with a required (and homogeneous) CTE. The design of these materials with tailored CTE can be tackled using the combination of components with positive and negative expansion. This tailored design of the composites' CTE can be carried out for different temperatures, so that the final field of application of the components with zero CTE will depend on whether the other characteristics that the specific functionality for that application requires are achieved. The family of ceramics and glass-ceramics of lithium aluminosilicate (LAS) is frequently used for this purpose in many fields of application; from glass-ceramics for kitchens to mirrors for satellites. Some mineral phases of this family have a negative CTE which allows their use in composites with controlled and tailored CTE. Frequently, materials with negative CTE have a low resistance to fracture, since their negativity is due to a strong anisotropy between the different crystallographic orientations, wherein negative expansion is usually found in one of them and positive expansion in the other two. Anisotropy usually causes microfissures which give the result of low values in the mechanical properties of these materials. However, the usefulness of these expansion properties for the manufacture of composites with zero CTE has a wide range of potential in engineering, photonics, electronics and/or specific structural applications (Roy, R. et al., Annual Review of Materials Science, 1989, 19, 59-81). The phase with negative expansion in the LAS system is β-eucryptite (LiAlSiO₄), due to the great negative expansion in the direction of one of its crystallographic axes. The spodumene (LiAlSi₂O₆) and petalite (LiAlSi₄O₁₀) phases have CTEs close to zero. The traditional method of manufacturing materials with LAS composition is the processing of glass to produce glass-ceramics. This method involves the forming of glass to later apply a heat treatment at lower temperatures for the subsequent precipitation of crystalline LAS phases and thus control its CTE. On occasions this process produces heterogeneous materials and, of course, as it is glass, its mechanical properties (rigidity and resistance) are not sufficiently high for many industrial applications compared to ceramics. This is the case of Zerodur® (marketed by Schott) widely used in a multitude of applications but with excessively low resistance to fracture and tensile modulus values. An alternative to glass-ceramics is, therefore, necessary if better mechanical properties are required. There are other ceramic materials with CTE close to zero such as cordierite as disclosed in US4403017, or Invar® likewise having insufficient mechanical properties. An alternative to the preparation of materials with low CTE consists of the addition of a second phase with positive coefficient of thermal expansion to a LAS ceramic matrix whose CTE is negative, as in the cases US6953538, JP2007076949 or JP2002220277, and patent application P200930633. This latter option is very interesting as both the CTE value and the other properties can be adjusted by the addition of the suitable proportions of second phases in the matrix. On the other hand, and bearing in mind that the end properties of the material are a consequence of the combination of two or more components, the main problem of these composites lies in managing to control the CTE value for a wide temperature range. Thus, in US6953538, JP2007076949 or JP2002220277, the temperature ranges wherein high dimensional stability is achieved are approximately 30-50 °C. In patent application P200930633 the temperature range for a CTE value close to zero is expanded.

Patent (US6566290B2) discloses a composite material with LAS matrix for application in the automotive field, such as filters in diesel engines, in which a material is protected using low CTE but having high porosity (up to 35 - 65 % by volume). These materials do not meet the requirements of improved mechanical properties.

### DESCRIPTION OF THE INVENTION

The present invention provides a composite material having a ceramic matrix and oxidic ceramic particles, which offers excellent mechanical and thermal properties and high resistance to oxidation; it also provides a process for obtaining same, and its uses in microelectronics, precision optics, aeronautics and aerospace.

A first aspect of the present invention relates to a material according to claim 1. In the present invention, "composite material" is understood as materials formed by two or more components that can be distinguished from one another; they have properties obtained from the combinations of their components, being superior to the materials forming them separately.

In the present invention "coefficient of thermal expansion" (CTE) is understood as the parameter reflecting the variation in the volume undergone by a material when it is heated.

The said ceramic component has a proportion with respect to the end material greater than 0.1% by volume.

In a preferred embodiment oxidic ceramic particles have a size of between 20 and 1000 nm.

The advantages of the material of the present invention by using mullite as a second phase in these composites lie in: the possibility of obtaining and using these materials in high temperature oxidizing atmospheres, while maintaining the CTE at values close to zero or controlled, low density composite with improved mechanical properties compared to pure LAS ceramics.

The present invention is based on new composite ceramic materials based on aluminosilicates with negative CTE and second phases of oxidic ceramic particles. The end composition of the material can be adjusted depending on the content of aluminosilicate with negative CTE used, which determines the required amount of the second oxidic phase to obtain an end material with CTE according to the desired needs.
A second aspect of the present invention relates to an obtainment process of the material as previously described, according to claim 2. The mixing of stage (a) is performed preferably between 100 and 500 r.p.m. This mixing can be performed in an attrition mill.

The processing conditions of the composite material have a decisive influence on critical features of the material formed, such as its density or porosity distribution, and which largely determine the possibility of obtaining a dense material by means of solid state sintering. During the powder mixture processing it is necessary to obtain a homogeneous distribution of the various components avoiding the formation of agglomerates, which is especially important in the case of nanometric powders.

The drying of stage (b) in a preferred embodiment is performed by atomization.

In the present invention "atomization" is understood as a method of drying by the pulverization of solutions and suspensions with an airstream.

The forming of stage (c) is performed preferably by cold or hot isostatic pressing.

In the present invention "isostatic pressing" is understood as a compacting method which is performed by hermetically enclosing the material, generally in the form of powder, in moulds, applying a hydrostatic pressure via a fluid; the parts thus obtained have uniform and isotropic properties.

When the cold isostatic pressing is performed, it is more preferably performed at pressures between 100 and 400 MPa.

Control over the reactivity of the phases at the sintering process allows adjustment of the CTE of the composite while maintaining a low density and improved mechanical properties and flexural rigidity as compared to the LAS monolithic ceramics.

The sintering temperature of stage (d) is between 700 and 1600 °C. The forming and sintering stages (c) and (d) are carried out by Spark Plasma Sintering (SPS) applying a uniaxial pressure of between 2 and 100 MPa at a temperature of between 700 and 1600 °C with a heating ramp of between 2 and 300 °C/min, remaining at this temperature for a period of between 1 and 120 min. This sintering method enables obtaining materials with controlled grain size using short periods of time.

In an embodiment not according to the invention, the forming and sintering stages (c) and (d) are carried out through hot press sintered applying a uniaxial pressure of between 5 and 150 MPa at a temperature of between 900 and 1600 °C with a heating ramp of between 0.5 to 100 °C/min, remaining at this temperature for 0.5 to 10 hours. This procedure can be performed using the Hot Press method.

The alternative presented in the present invention is the obtainment of ceramic materials with a low coefficient of thermal expansion and controlled in a wide temperature range, which makes them adaptable to a multitude of applications, due to their mechanical properties, their low density and stability at high temperatures in an oxidizing atmosphere.

The preparation is carried out by a simple manufacturing process of nanocomposite powder, which is formed and sintered in solid state by different techniques, avoiding the formation of glass and, in consequence, achieving improved mechanical properties. A β-eucryptite matrix has been selected and a second stage of mullite in nanoparticulate form, with the aim of obtaining an end material with good mechanical performance, resistant in oxidizing atmospheres and a controlled dimensional stability, characterized in that it is composed of a component with negative coefficient of thermal expansion and ceramic materials of an oxidic nature, with a porosity of less than 10 vol%, with a coefficient of thermal expansion adjusted according to the composition between -6x10⁻⁶ and +6 x10⁻⁶ C⁻¹ in the temperature range between -150 °C and +750 °C, a resistance to fracture above 80 MPa and an tensile modulus exceeding 50 GPa and a low density.

A third aspect of the present invention relates to the use of the material as a material in the manufacture of ceramic components with high dimensional stability. And preferably in the manufacture of the structure of mirrors in astronomical telescopes and X-ray telescopes in satellites, optical elements in comet probes, meteorological satellites and microlithography, mirrors and frames in ring laser gyroscopes, resonance laser distance indicators, measuring boards and standards in high precision measurement technologies.

Throughout the description and the claims the word "comprises" and its variants are not intended to exclude other technical characteristics, additives, components or steps. For persons skilled in the art, other objects, advantages and characteristics of the invention will be inferred in part from the description and in part from the practice of the invention. The following examples and figures are provided by way of illustration, and are not intended to limit the present invention.

### DESCRIPTION OF THE FIGURES

**Figure 1****.** Shows the phase diagram of the Li₂O-Al₂O₃-SiO₂ system, showing the composition used in the examples of the present invention.
**Figure 2****.** Shows the α curves corresponding to the LAS/Al₂O₃ materials obtained by sintering in air in a conventional oven and SPS.

### EXAMPLES

Below, the invention will be illustrated with assays performed by the inventors, which reveal the specificity and efficacy of the ceramic composite material with high dimensional stability and controlled CTE in the range (-150, +750) °C as a particular embodiment of the process object of the invention.

### Example 1 (not according to the invention)

### Composite material LAS/Al₂O₃ with CTE lower than |0.7|x10⁻⁶ °C⁻¹ in the range - 150 °C to 750 °C

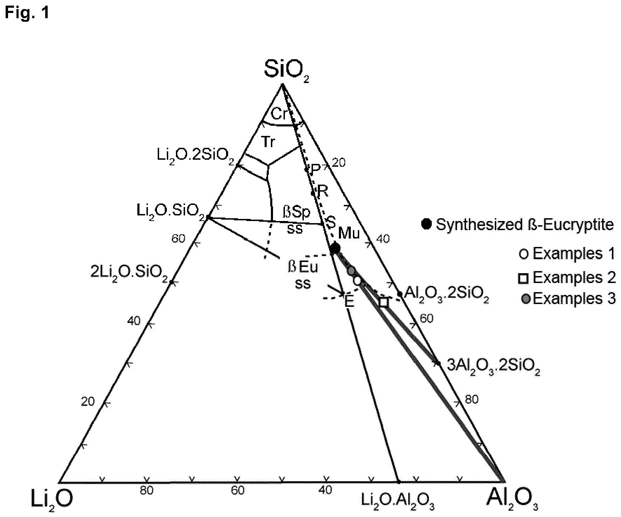

The starting materials are:
- LAS powder with the composition LiAlSiO₄ (composition in Figure 1) with average particle size of 1 µm and density 2.39 g/cm³.
- Al₂O₃ powder with average particle size less than 160 nm and density 3.90 g/cm³.
- Anhydrous ethanol (99.97% purity)

**Table 1: Abbreviations used in Figure 1.**

| **Abbreviation** | **Compound** |
|---|---|
| Cr | Cristobalite |
| Tr | Tridymite |
| Mu | Mullite |
| B Sp ss | Spodumene solid solution |
| B Eu ss | Eucryptite solid solution |
| P | Petalite |
| R | Li orthoclase |
| S | Spodumene |
| E | Eucryptite |

872 g of LAS were used dispersed in 1400 g of ethanol. This was subsequently mixed with a suspension of 128 g of Al₂O₃ in 1000 g of ethanol. The whole mixture was homogenized using mechanical stirring for 60 minutes and then milled in an attrition mill operating at 300 rpm for 60 minutes. The suspension thus prepared was dried by atomization, yielding nanocomposite granules while at the same time ethanol is recovered from the process. The milling step made it possible to prepare a nanometre-sized homogeneous powder and improved densification of the end material.

The dry product was subjected to a forming process using cold isostatic pressing at 200 MPa. A formed material was obtained which was sintered in air in a conventional at 1350 °C, with a stay of 240 minutes and heating ramp of 5°C/min. After this stay cooling was also controlled at 5 °C/min to a temperature of 900 °C and from that temperature it was allowed to cool the oven without temperature control.

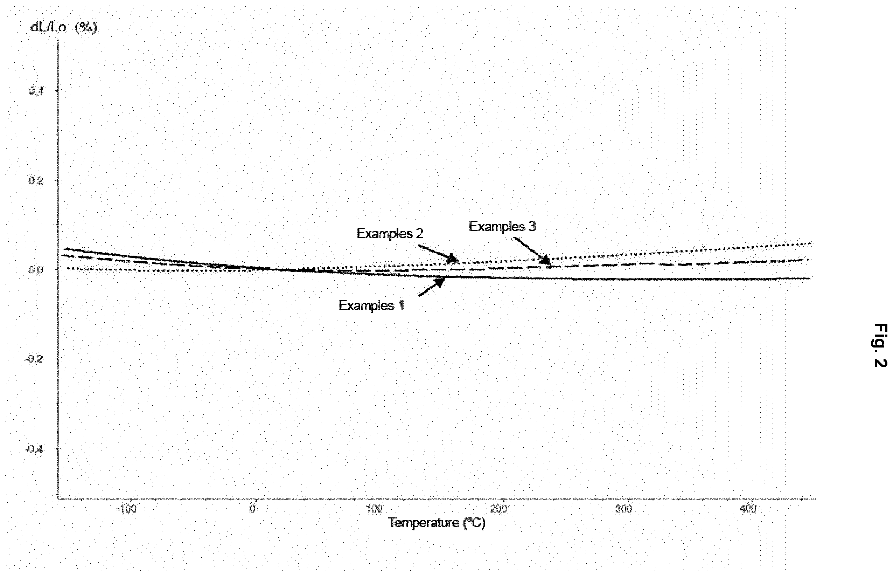

The resulting material was characterized by its real density (helium pycnometry), apparent density (Archimedes' method), Young's modulus (resonance frequency method in a Grindosonic unit), resistance to fracture (four point bending method in an INSTRON 8562 unit), and coefficient of thermal expansion (dilatometer, make: NETZCH, model: DIL402C). The corresponding values appear in Table 2. The variation of the coefficient of thermal expansion with the temperature is represented in Figure 2.

**Table 2: Results obtained from the characterization of the materials LAS/Al₂O₃**

| **Property** | **Ex.1** |
|---|---|
| % Theoretical density 100x(dₐₚₚₐᵣₑₙₜ/dᵣₑₐₗ) | 93.70 |
| Young's modulus (GPa) | 110 |
| Resistance to fracture (Mpa) | 138 |
| CTE(x10⁻⁶ °C⁻¹) (-150, 450) °C | -1.08 |
| CTE(x10⁻⁶ °C⁻¹) (-150, 750) °C | -0.70 |

### Example 2

### Composite material LAS/3Al₂O₃.2SiO₂ with CTE < |0.9|x10⁻⁶ °C⁻¹ in the range -150 °C to 450 °C.

The starting materials are:
- LAS powder with the composition LiAlSiO₄ (composition in Figure 1) with average particle size of 1 µm and density 2.39 g/cm³.
- Mullite powder (3Al₂O₃.2SiO₂), with average particle size of 700 nm and density 3.05 g/cm³.
- Anhydrous ethanol (99,97% purity)

562 g of LAS were used which were dispersed in 1400 g of ethanol. It was then mixed with a suspension of 438 g of mullite powder (3Al₂O₃.2SiO₂) in 1000 g of ethanol. The combination was homogenized by mechanical stirring during 60 minutes and is then milled in an attrition mill loaded with 9 kg of grinding balls operating at 300 r.p.m. during a further 60 minutes.

The suspension was dried by atomization, obtaining nanocomposite granules whist recovering the ethanol from the process.

The dry product thus obtained was subjected to a forming and sintering process using Spark Plasma Sintering (SPS). For this, 50 grams of the material were introduced in a graphite mould with a diameter of 40 mm and it was uniaxially pressed at 5 MPa. Thereafter, the sintering was carried out by applying a maximum pressure of 16 MPa, with a heating ramp of 100 °C/min up to 1250 °C and a 2-minute stay.

The resulting material was characterized by its real density (helium pycnometry), apparent density (Archimedes' method), Young's modulus (resonance frequency method in a Grindosonic unit), resistance to fracture (four point bending method in an INSTRON 8562 unit), and coefficient of thermal expansion (dilatometer, make; NETZCH, model; DIL402C). The corresponding values appear in Table 3. The variation of the coefficient of thermal expansion with the temperature is represented in Figure 2.

**Table 3: Results obtained from the characterization of the LAS/Al₂O₃ materials.**

| **Property** | **Ex.2** |
|---|---|
| % Theoretical density 1 00x(dₐₚₚₐᵣₑₙₜ/dᵣₑₐₗ) | 99.99 |
| Young's module (GPa) | 128 |
| Resistance to fracture (MPa) | 166 |
| CTE(x10⁻⁶ °C⁻¹) (-150, 450) °C | 0.90 |
| CTE(x10⁻⁶ °C⁻¹) (-150, 750) °C | n.d |

### Example 3 (not according to the invention)

### Composite material LAS/3Al₂O₃.2SiO₂ with CTE < |0.6|x10⁻⁶ °C⁻¹ in the range - 150°C to 450°C.

The starting materials are:
- LAS powder with the composition LiAlSiO₄ (composition in Figure 1) with average particle size of 1 µm and density 2.39 g/cm³.
- Al₂O₃, powder with average particle size less than 160 nm and density 3.90 g/cm³.
- Anhydrous ethanol (99.97% purity)

843 g of LAS were used which were dispersed in 1400 g of ethanol. This was then mixed with a suspension of 157 g of n-SiC in 1000 g of ethanol. The combination was homogenized by mechanical stirring during 60 minutes and was then milled in an attrition mill loaded with 9 kg of grinding balls operating at 300 r.p.m. during a further 60 minutes.

The suspension was dried by atomization, obtaining nanocomposite granules whist recovering the ethanol from the process.

The dry product thus obtained was subjected to a forming and sintering process using Hot-Press. For this, 50 grams of the material were introduced in a graphite mould with a diameter of 50 mm and this was uniaxially pressed at 15 MPa. Next, the sintering was carried out by applying a maximum pressure of 50 MPa, with a heating ramp of 5 °C/min to 1200 °C and a 60-minute stay.

The resulting material was characterized by its real density (helium pycnometry), apparent density (Archimedes' method), Young's modulus (resonance frequency method in a Grindosonic unit), resistance to fracture (four point bending method in an INSTRON 8562 unit), and coefficient of thermal expansion (dilatometer, make: NETZCH, model: DIL402C). The corresponding values appear in Table 4. The variation of the coefficient of thermal expansion with the temperature is represented in Figure 2.

**Table 4: Results obtained from the characterization of the LAS/Al₂O₃ materials**

| **Property** | **Ex.3** |
|---|---|
| % Theoretical density 1 00x(dₐₚₚₐᵣₑₙₜ/dᵣₑₐₗ) | 100.0 |
| Young's module (GPa) | 135 |
| Resistance to fracture (MPa) | 164 |
| CTE(x10⁻⁶ °C⁻¹) (-150, 450) °C | -0.15 |
| CTE(x10⁻⁶ °C⁻¹) (-150, 750) °C | n.d |

## Claims

1. Material consisting of:
a. A ceramic component matrix of β-eucryptite, and
b. Oxidic ceramic particles of mullite in nanoparticulate form,
wherein said material is **characterized in that**
• it has a porosity of less than 10 % in volume;
• it has a controlled coefficient of thermal expansion between -6x10⁻⁶ °C⁻¹ and 6.01x10⁻⁶ °C⁻¹ in a temperature range between -150 °C to 750 °C;
• it has a resistance to fracture above 80 MPa;
• it has a tensile modulus exceeding 50 GPa
• and it has low density;
and wherein said material is obtained by a process comprising the stages:
(a) Mixing of the ceramic component matrix of β-eucryptite, with the oxidic ceramic particles of mullite in nanoparticulate form, in a solvent, preferably the solvent is selected from water, anhydrous alcohol or any of their combinations, preferably the anhydrous alcohol is anhydrous ethanol, more preferably the mixing is performed in an attrition mill operating at 100 to 500 r.p.m;
(b) drying of the mixture obtained in (a), preferably the drying is performed by atomization;
(c) forming of the material obtained in (b); and
(d) sintering of the material obtained in (c);
wherein stages (c) and (d) are performed in a single stage and wherein the forming step (c) and sintering step (d) is performed by Spark Plasma Sintering and by applying a uniaxial pressure of between 2 and 100 MPa, at a temperature between 700 and 1600 °C, and a heating ramp between 2 and 300 °C/min, remaining at this temperature for a period between 1 and 120 min.

2. Obtainment process of the composite material according to claim 1 comprising the stages:
(a) Mixing of the ceramic component matrix of β-eucryptite, with the oxidic ceramic particles of mullite in nanoparticulate form, in a solvent, preferably the solvent is selected from water, anhydrous alcohol or any of their combinations, preferably the anhydrous alcohol is anhydrous ethanol, more preferably the mixing is performed in an attrition mill operating at 100 to 500 r.p.m;
(b) drying of the mixture obtained in (a), preferably the drying is performed by atomization;
(c) forming of the material obtained in (b); and
(d) sintering of the material obtained in (c);
wherein stages (c) and (d) are performed in a single stage and wherein the forming step (c) and sintering step (d) is performed by Spark Plasma Sintering and by applying a uniaxial pressure of between 2 and 100 MPa, at a temperature between 700 and 1600 °C, and a heating ramp between 2 and 300 °C/min, remaining at this temperature for a period between 1 and 120 min.

3. Use of the material according to claim 1, as material in the manufacture of ceramic components with high dimensional stability.

4. Use of the composite material according to claim 3, in the manufacture of the structure of mirrors in astronomical telescopes and X-ray telescopes on satellites, optical elements in comet probes, meteorological satellites and microlithography, mirrors and frames in ring-laser gyroscopes, resonance laser distance indicators, measuring boards and standards in high precision measuring technology.

## Patentansprüche

1. Material, welches aus Folgendem besteht:
a. Einer Matrix aus einem keramischen Bestandteil aus β-Eukryptit, und
b. Oxidkeramikteilchen aus Mullit in nanopartikulärer Form,
wobei das Material **dadurch gekennzeichnet ist, dass**
• es eine Porosität von weniger als 10 Vol.-% aufweist;
• es einen gesteuerten Wärmeausdehnungskoeffizienten zwischen - 6x10⁻⁶ °C⁻¹ und 6,01x10⁻⁶ °C⁻¹ in einem Temperaturbereich zwischen -150 °C und 750 °C aufweist;
• es eine Bruchfestigkeit über 80 MPa aufweist;
• es ein Zugmodul von mehr als 50 GPa aufweist;
• und dass es eine niedrige Dichte aufweist;
und wobei das Material durch ein Verfahren erhalten wird, welches die folgenden Schritte umfasst:
(a) Mischen der Matrix aus einem keramischen Bestandteil aus β-Eukryptit mit den Oxidkeramikteilchen aus Mullit in nanopartikulärer Form in einem Lösungsmittel, wobei das Lösungsmittel vorzugsweise aus Wasser, wasserfreiem Alkohol oder jeder ihrer Kombinationen ausgewählt ist, wobei der wasserfreie Alkohol vorzugsweise wasserfreies Ethanol ist, wobei das Mischen insbesondere in einer bei 100 bis 500 min⁻¹ arbeitenden Reibmühle durchgeführt wird;
(b) Trocknen des in (a) erhaltenen Gemisches, wobei das Trocknen vorzugsweise durch Zerstäubung durchgeführt wird;
(c) Bilden des in (b) erhaltenen Materials; und
(d) Sintern des in (c) erhaltenen Materials;
wobei die Schritte (c) und (d) in einem einzigen Schritt durchgeführt werden und wobei der Bildungsschritt (c) und Sinterschritt (d) durch Spark Plasma Sintern und durch Anwenden eines uniaxialen Drucks von zwischen 2 und 100 MPa bei einer Temperatur zwischen 700 und 1 600 °C und einer Heizrampe zwischen 2 und 300 °C/min unter Beibehaltung dieser Temperatur für einen Zeitraum zwischen 1 und 120 min durchgeführt werden.

2. Erhaltungsverfahren des Verbundmaterials nach Anspruch 1, welches die folgenden Schritte umfasst:
(a) Mischen der Matrix aus einem keramischen Bestandteil aus β-Eukryptit mit den Oxidkeramikteilchen aus Mullit in nanopartikulärer Form in einem Lösungsmittel, wobei das Lösungsmittel vorzugsweise aus Wasser, wasserfreiem Alkohol oder jeder ihrer Kombinationen ausgewählt ist, wobei der wasserfreie Alkohol vorzugsweise wasserfreies Ethanol ist, wobei das Mischen insbesondere in einer bei 100 bis 500 min⁻¹ arbeitenden Reibmühle durchgeführt wird;
(b) Trocknen des in (a) erhaltenen Gemisches, wobei das Trocknen vorzugsweise durch Zerstäubung durchgeführt wird;
(c) Bilden des in (b) erhaltenen Materials; und
(d) Sintern des in (c) erhaltenen Materials;
wobei die Schritte (c) und (d) in einem einzigen Schritt durchgeführt werden und wobei der Bildungsschritt (c) und Sinterschritt (d) durch Spark Plasma Sintern und durch Anwenden eines uniaxialen Drucks von zwischen 2 und 100 MPa bei einer Temperatur zwischen 700 und 1 600 °C und einer Heizrampe zwischen 2 und 300 °C/min unter Beibehaltung dieser Temperatur für einen Zeitraum zwischen 1 und 120 min durchgeführt werden.

3. Verwendung des Materials nach Anspruch 1 als Material in der Herstellung von keramischen Bestandteilen mit hoher Dimensionsstabilität.

4. Verwendung des Verbundmaterials nach Anspruch 3 in der Herstellung der Struktur von Spiegeln in astronomischen Teleskopen und Röntgenteleskopen auf Satelliten, optischen Elementen in Kometensonden, Wettersatelliten und der Mikrolithographie, Spiegeln und Rahmen in Ringlaserkreiseln, Entfernungsanzeigern durch Resonanzlaser, Messplatinen und Standards in der Hochpräzisionsmesstechnik.

## Revendications

1. Matériau consistant en :
a. Un composant à matrice céramique de β-eucryptite, et
b. Des particules céramiques oxydiques de mullite sous forme de nanoparticules,
dans lequel ledit matériau est **caractérisé en ce que**
• il a une porosité inférieure à 10 % en volume ;
• il a un coefficient d'expansion thermique contrôlé entre -6x10⁻⁶ °C⁻¹ et 6,01x10⁻⁶ °C⁻¹ dans une plage de température entre -150 °C et 750 °C ;
• il a une résistance à la fracture au-dessus de 80 MPa ;
• il a un module de traction dépassant 50 GPa
• et il a une faible densité ;
et dans lequel ledit matériau est obtenu par un procédé comprenant les phases :
(a) Mélange du composant à matrice céramique de β-eucryptite, avec les particules céramiques oxydiques de mullite sous forme de nanoparticules, dans un solvant, de préférence le solvant est choisi parmi l'eau, l'alcool anhydre ou l'une quelconque de leurs combinaisons, de préférence l'alcool anhydre est l'éthanol anhydre, plus préférablement le mélange est réalisé dans un broyeur par attrition fonctionnant de 100 à 500 tr/min ;
(b) séchage du mélange obtenu dans (a), de préférence le séchage est réalisé par atomisation ;
(c) formage du matériau obtenu dans (b) ; et
(d) frittage du matériau obtenu dans (c) ;
dans lequel les phases (c) et (d) sont réalisées en une seule phase et dans lequel l'étage de formage (c) et l'étape de frittage (d) sont réalisées par frittage par plasma à étincelle et en appliquant une pression uniaxiale comprise entre 2 et 100 MPa, à une température entre 700 et 1600 °C, et une rampe de chauffage entre 2 et 300 °C/min, restant à cette température pendant une période entre 1 et 120 min.

2. Procédé d'obtention du matériau composite selon la revendication 1 comprenant les phases :
(a) Mélange du composant à matrice céramique de β-eucryptite, avec les particules céramiques oxydiques de mullite sous forme de nanoparticules, dans un solvant, de préférence le solvant est choisi parmi l'eau, l'alcool anhydre ou l'une quelconque de leurs combinaisons, de préférence l'alcool anhydre est l'éthanol anhydre, plus préférablement le mélange est réalisé dans un broyeur par attrition fonctionnant de 100 à 500 tr/min ;
(b) séchage du mélange obtenu dans (a), de préférence le séchage est réalisé par atomisation ;
(c) formage du matériau obtenu dans (b) ; et
(d) frittage du matériau obtenu dans (c) ;
dans lequel les phases (c) et (d) sont réalisées en une seule phase et dans lequel l'étage de formage (c) et l'étape de frittage (d) sont réalisées par frittage par plasma à étincelle et en appliquant une pression uniaxiale comprise entre 2 et 100 MPa, à une température entre 700 et 1600 °C, et une rampe de chauffage entre 2 et 300 °C/min, restant à cette température pendant une période entre 1 et 120 min.

3. Utilisation du matériau selon la revendication 1, comme matériau dans la fabrication de composants céramiques ayant une grande stabilité dimensionnelle.

4. Utilisation du matériau composite selon la revendication 3, dans la fabrication de la structure de miroirs dans les télescopes astronomiques et les télescopes à rayons X sur les satellites, les éléments optiques dans les sondes cométaires, les satellites météorologiques et la microlithographie, les miroirs et les châssis dans les gyroscopes à laser en anneau, les indicateurs de distance du laser de résonance, les planches à mesurer et les normes dans la technologie de mesure de haute précision.
